Europäisches Patentamt

European Patent Office

Office européen des brevets

(19)

(11) Numéro de publication : **0 459 841 A1**

# (12) DEMANDE DE BREVET EUROPEEN

(21) Numéro de dépôt : **91400971.7**

(51) Int. Cl.⁵ : **B23P 19/02, B23P 19/04**

(22) Date de dépôt : **11.04.91**

(30) Priorité : **29.05.90 FR 9006632**

(43) Date de publication de la demande :
**04.12.91 Bulletin 91/49**

(84) Etats contractants désignés :
**AT BE CH DE DK ES GB GR IT LI LU NL SE**

(71) Demandeur : **FERCO International USINE DE FERRURES DE BATIMENT 2 rue du Vieux Moulin REDING F-57400 Sarrebourg (FR)**

(72) Inventeur : **Kautt, Jean-Jacques 24, rue Pertois F-67000 Strasbourg (FR)**

(74) Mandataire : **Rodhain, Claude et al Cabinet Claude Rodhain 30, rue la Boétie F-75008 Paris (FR)**

(54) **Machine pour la pose automatique de ferrures.**

(57)    L'invention concerne une machine pour la pose automatique d'une ferrure ou de parties de ferrures périmétrales sur les montants et traverses d'un ouvrant, en particulier d'une crémone avec ses accessoires tels que renvois d'angle, prolongateurs ou équivalents, associés à des moyens automatiques de stockage, de préhension, de coupe et de mise en place de la ferrure dans la machine.

Cette machine est caractérisée en ce qu'elle comporte un berceau à trois degrés de liberté recevant la ferrure et sur lequel est monté un ensemble automatique d'outils de pose (30, 10, 30').

EP 0 459 841 A1

Détail A

30

20

50

10

20

Détail B

D

50

10

20

30'

0

Détail C

D

FIG. 2

La présente invention concerne une machine pour la pose automatique d'une ferrure ou de parties de ferrures périmétrales sur les montants et traverses d'un ouvrant et procédé de pose automatique à l'aide d'une telle machine.

Cette machine est destinée à équiper tous types d'ouvrants pouvant recevoir une ferrure du type crémone ou crémone serrure. Le cas le plus complexe étant le cas de l'ouvrant oscillobattant qui peut recevoir plusieurs éléments de la ferrure et ce sur les quatre côtés de l'ouvrant.

Il existe trois types de crémone :
- les crémones ne verrouillant qu'aux extrémités par la sortie de leur tringle, laquelle verrouille l'ouvrant dans le sens du mouvement de la tringle. Dans ce cas, il y a deux tringles de mouvement opposées et seul un côté de l'ouvrant est équipé ;
- les crémones ne verrouillant qu'à partir du chant avant de l'ouvrant. Ce sont dès lors des galets qui sont solidaires de la tringle et cette dernière est monodirectionnelle et un côté de l'ouvrant est équipé ;
- les crémone verrouillant à la fois par leurs extrémités et par leurs chants.

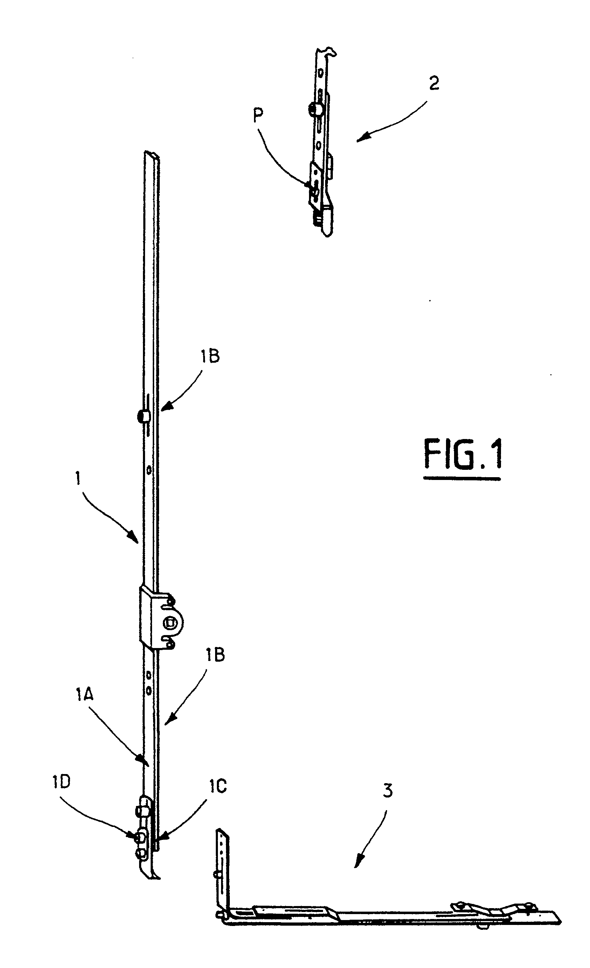

La figure 1 représente trois types de ferrures et est destinée à mieux comprendre la machine conforme à l'invention.

Cette figure représente une crémone serrure 1 comportant une têtière 1A, une tringle 1B sur la face arrière de la têtière et une partie de liaison d'extrémité comportant une plaquette 1C et un axe ressort 1D.

Dans le cas d'ouvrants que l'on veut équiper de ferrures de verrouillage sur plusieurs côtés de l'ouvrant, c'est-à-dire lorsque l'on veut répercuter le déplacement d'ouverture ou de verrouillage au niveau de gâches disposées non seulement sur le montant mais également sur les traverses, est utilisé un renvoi d'angle du type 3 qui répercute le mouvement de la tringle 1B sur un complément de crémone sans boîtier de manoeuvre.

Les moyens de liaison entre tringles sont réalisés grâce à un doigt d'accrochage sur l'extrémité d'une tringle dans une lumière prévue à l'extrémité de l'autre tringle ou par des secteurs dentés s'engrénant dans des dispositifs appropriés d'accrochage.

Le premier cas est illustré par la liaison entre la crémone 1 et le renvoi d'angle 3, le second cas est illustré par la liaison de la crémone 1 et du prolongateur 2. Dans le cas des ouvrants en bois et PVC, les têtières sont mises bout à bout et une aile de recouvrement solidaire de la face extérieure de l'extrémité de l'une d'elle, vient recouvrir le chant avant de l'autre extrémité.

Un vissage rend ces liaisons solidaires.

Lorsque les crémones ne sont pas de longueur standard, il arrive qu'il faille poser une crémone qui soit plus longue que nécessaire et on réalise alors une opération de mise à longueur en coupant têtières et tringles de façon adéquate pour qu'elles puissent réaliser leurs fonctions ; si la tringle verrouille par cette extrémité on procède à une coupe biseautée de cette dernière et à une coupe droite de la têtière et si cette crémone est à raccorder avec d'autres composants de ferrure on procède alors à une coupe droite des tringles et des têtières. Ces deux cas correspondent aux deux types de fixation déjà décrits plus précisément à la fixation par tenon telle que la liaison de la crémone 1 avec le renvoi d'angle 3, ou la fixation par secteur denté telle que la liaison de la crémone avec le prolongateur 2.

Au contraire lorsque la crémone n'est pas de longueur suffisante elle est reliée à un prolongateur de crémone tel que 2 qui est en réalité une partie de têtière associée à une tringle courte.

Les tringles dites périmètrales et les crémones d'oscillo-battants comprennent toujours une crémone pouvant être recoupée ou non et comporte un boîtier de manoeuvre dont les extrémités sont raccordées à des renvois d'angle eux-mêmes reliés :
- côté traverse supérieure à une têtière de compas comprenant le dispositif de liaison au dormant par un bras de compas comprenant le dispositif de raccordement au palier de compas ;
- côté traverse inférieure à un prolongateur lui-même relié par un autre renvoi d'angle à un verrouillage latéral côté paumelle qui peut être considéré comme un prolongateur.

L'invention propose donc une machine automatique permettant la pose automatique de ces types de ferrures et dans le cas de crémones quel que soit son type.

De nos jours encore toutes les manipulations de pose et de fixation de telles ferrures se font souvent à la main. Il est proposé cependant des lignes d'outillage automatiques permettant d'immobiliser un côté de l'ouvrant et de saisir une crémone ou composant qui est logé dans un berceau paramétré aux caractéristiques de ce dernier.

Ce berceau comprend les outils de fixation et son articulation permet d'introduire la ferrure dans la rainure du vantail. Ensuite les outils montés coulissants sont déplacés pour assurer les fixations.

Mais compte tenu de la grande diversité des composants et leur application, seuls quelques poses et fixations de certaines ferrures peuvent être réalisées de cette manière avec des outils en ligne et seulement sur un seul côté de l'ouvrant. L'équipement total est toujours opéré manuellement.

Le but de l'invention est de permettre l'automatisation de la prise en charge d'une ferrure (crémone ou accessoire), l'automatisation de l'ordre de montage de ces derniers et l'automatisation de la pose et de la fixation quel que soit le type d'ouvrant et quelles que soient ses dimensions.

Pour ce faire, la présente invention concerne une machine pour la pose automatique d'une ferrure ou de parties de ferrures périmétrales sur les montants et traverses d'un ouvrant, en particulier d'une crémone avec ses accessoires tels que renvois d'angle, prolongateurs ou équivalents associés à des moyens automatiques de stockage, de préhension, de coupe et de mise en place de la ferrure dans la machine.

Cette machine est remarquable en ce qu'elle comporte un berceau à trois degrés de liberté recevant la ferrure et sur lequel est monté un ensemble automatique d'outils de pose.

Le procédé de pose à l'aide de cette machine est également remarquable par le fait qu'il permet tout autant la pose de ferrures sur les accessoires de liaison par tringle dentée et secteur d'engrènement, que sur des accessoires à liaison par emboîtement d'axe-ressort.

L'invention est exposée ci-après plus en détail à l'aide de dessins représentant seulement un mode d'exécution :

– la figure 1 représente des exemples de ferrures pouvant être montés grâce à la machine conforme à l'invention ;

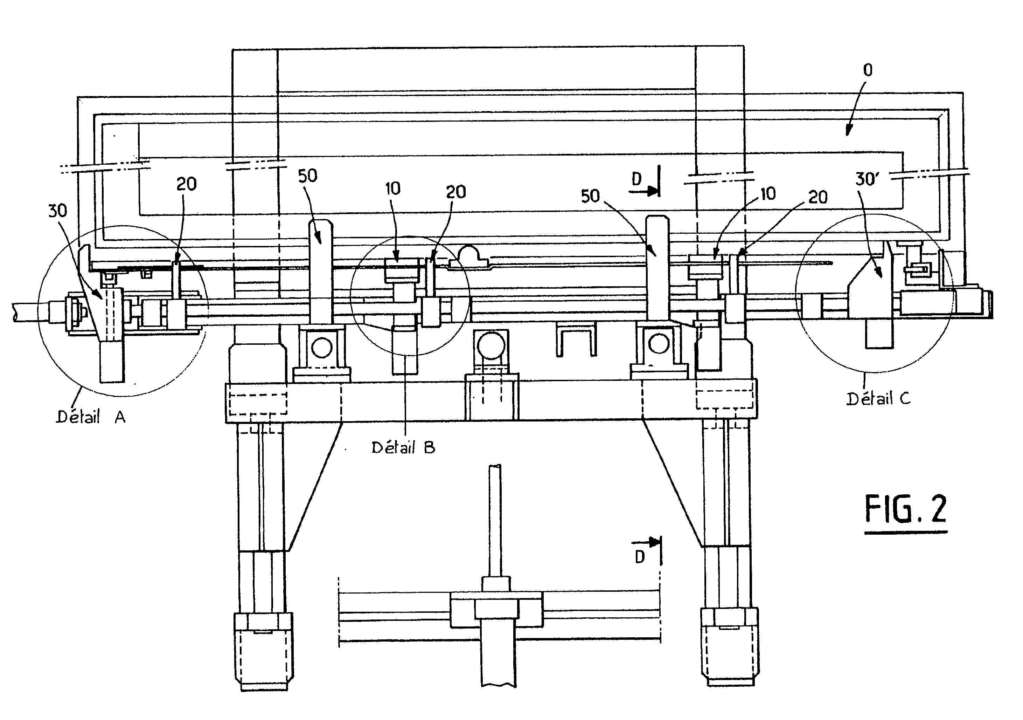

– la figure 2 représente une vue de dessus de la machine conforme à l'invention ;

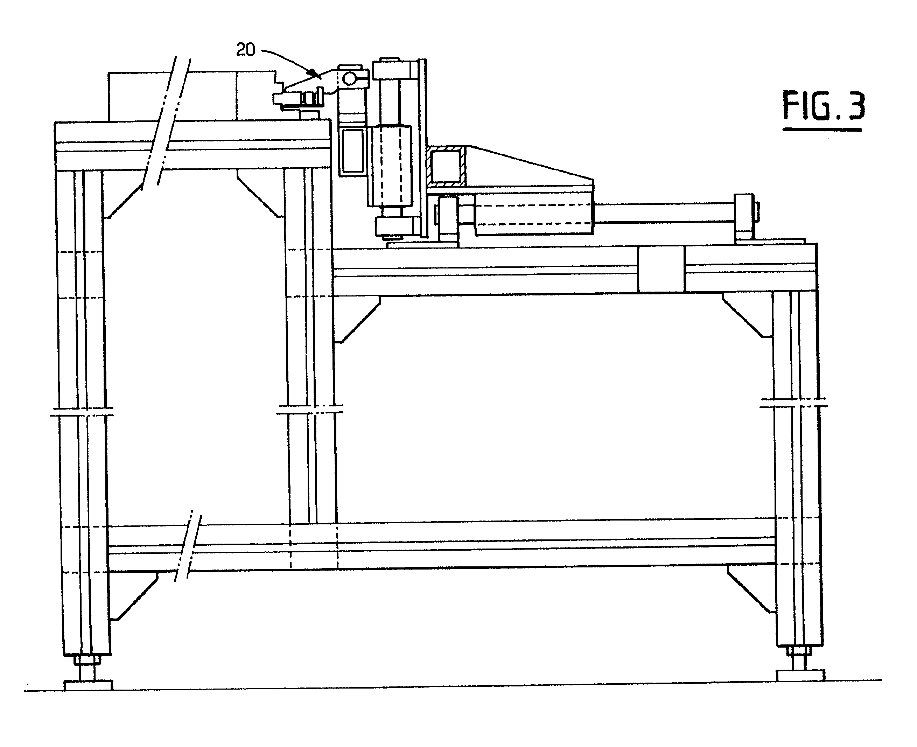

– la figure 3 est une vue en coupe selon la ligne D-D de la figure 2 ;

– la figure 4 est une vue de dessus en coupe partielle et agrandie du détail B de la machine ;

– la figure 5 est une vue en coupe selon la ligne brisée H-H de la figure 4 ;

– la figure 6 est une vue selon F de la figure 4 ;

– la figure 7 est une vue de dessus en coupe partielle agrandie du détail A de la figure 2 ;

– la figure 8 est une vue de dessus en coupe partielle et agrandie du détail C.

La machine décrite sur ces figures est destinée à être agencée avec des moyens de préhension automatiques destinés à saisir les ferrures et autres accessoires dans des magasins adaptés, à positionner ces ferrures dans un outil de coupe également automatique pour la mise à longueur éventuelle des ferrures et/ou pour le prépositionnement des accessoires associés à la ferrure. Un mécanisme d'alimentation automatique du ou des magasins vers le dispositif de préhension est également prévu. De plus, un dispositif d'amenage automatique des cadres d'ouvrants est associé à la présente machine.

La machine décrit ci-dessous permet donc la pose et la fixation de crémones et d'accessoires tels que prolongateur 2, têtière de renvoi 3, mais elle peut également être utilisée pour la mise en place d'autres pièces de ferrure.

L'ouvrant O est amené en vis-à-vis de la machine face extérieure tournée vers le tapis et traverse supérieure en aval dans le sens d'amenée. Des dispositifs d'amenage préférés du cadre ont été décrits dans les brevets et demandes de brevet antérieurs de la déposante.

La ferrure apprêtée est déposée dans le berceau du dispositif de pose grâce à un manipulateur. Le berceau de préhension est solidaire au bâti de la machine et est un ensemble à trois degrés de liberté dont :

– une translation verticale pour la mise en référence de la ferrure avec la rainure de l'ouvrant ;

– une translation horizontale dans le plan de l'ouvrant à deux temps pour permettre une première approche de la ferrure au droit de la rainure dans un premier temps et dans un deuxième temps sa dépose dans la rainure ;

– une translation latérale du dispositif du berceau appliquée à la ferrure pour sa mise en référence à partir de son extrémité.

Tous les moyens de déplacement de la machine sont pneumatiques et guidés par guidage à billes.

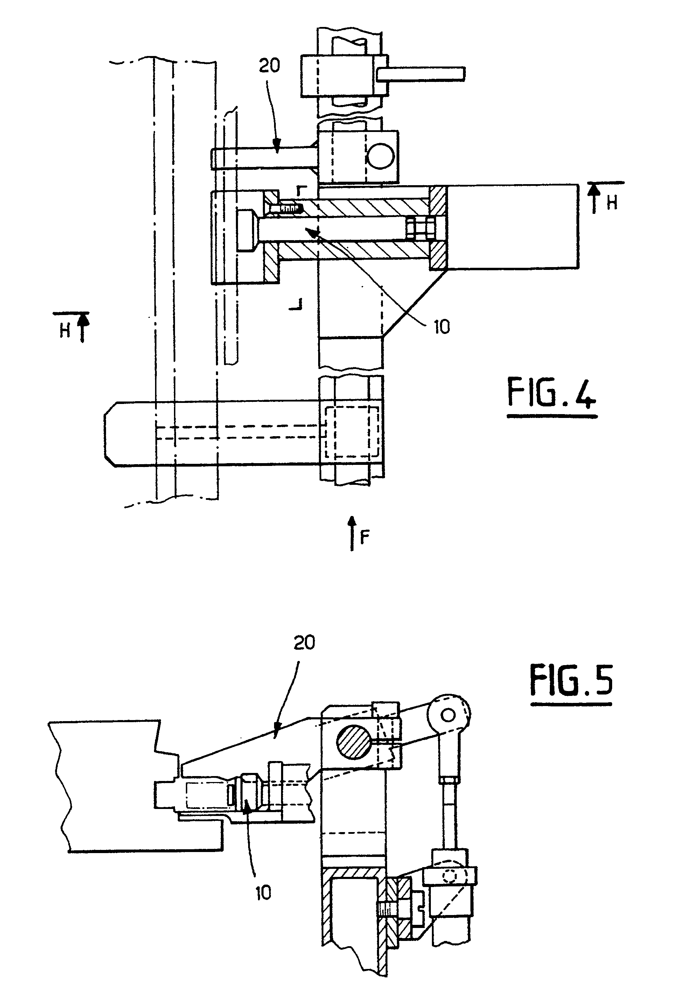

Une fois mise en place dans le berceau, la têtière est saisie par des mâchoires constituant des pinces 20 représentées plus précisément en vue de côté sur la figure 5.

Le plan de la têtière est alors parallèle au champ de l'ouvrant à équiper.

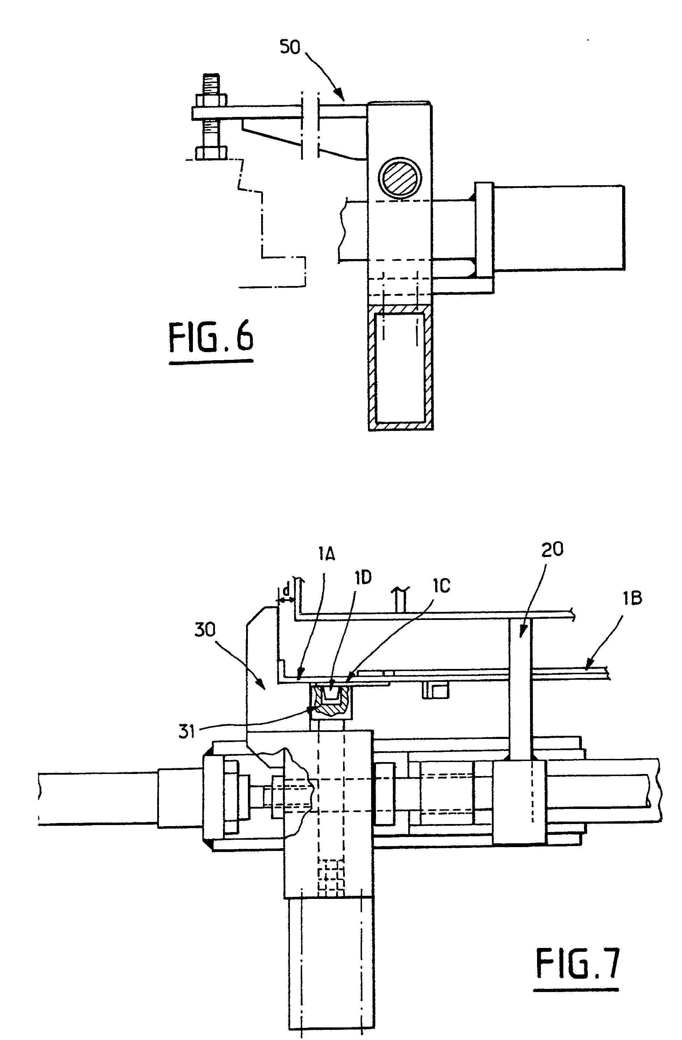

Les pinces 20 sont formées de rampes qui permettent non seulement un maintien constant mais un auto-dégagement sous l'effet de poussoirs pneumatiques 10. Ces poussoirs 10 viennent s'appliquer sur la face extérieure de la têtière lorsque cette dernière a été immobilisée par les pinces 20. L'ensemble du berceau de préhension est mis en référence avec la rainure de l'ouvrant O, par combinaison d'un déplacement horizontal jusqu'à ce que l'extrémité des rampes des mâchoires 20 viennent en contact avec l'ouvrant et d'un déplacement vertical limité et déterminé par les dispositifs 50 de butée sur l'ouvrant (figure 6).

Simultanément, à la mise en place des poussoirs 10, un élément translatable longitudinalement 31 formant poussoir également et comportant une tête pourvue d'une cavité vient s'appliquer contre l'un des éléments rapportés dans la têtière par exemple un galet, un moyen de liaison de tringle ou équivalent. A ce moment, la butée 30 qui est solidaire de l'élément 31 (figure 7) est en contact avec l'extrémité de la têtière 1A et la rainure et la têtière équipées de ces différents accessoires sont rigoureusement faces l'une à l'autre et il peut être procédé à la dépose de la ferrure dans la rainure.

Cette mise en place se réalise séquentiellement en commençant par la mise en place d'une extrémité de la ferrure pour terminer à l'autre extrémité de la ferrure.

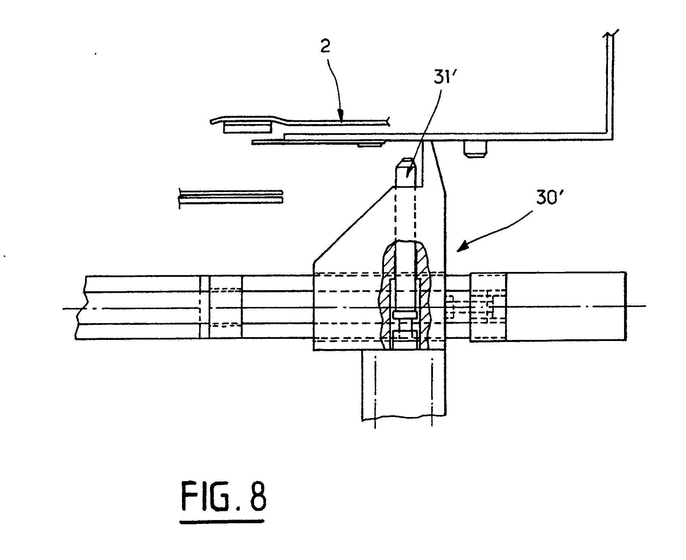

A l'autre extrémité de la traverse de l'ouvrant O un prolongateur 2 ou autre ferrure à tringles dentées est déjà fixé sur l'ouvrant. Grâce au dispositif de pose 30' (figure 8) côté droit, un tenon 31' translatable en direction de l'ouvrant par rapport au dispositif 30' et longitudinalement le long de la traverse simultanément avec le dispositif 30' vient s'encastrer dans un logement de la plaquette P et par déplacement longitudinal translate celle-ci afin qu'elle vienne recouvrir la partie dentée d'engrénement du prolongateur 2. Ceci est réalisé comme on le verra plus loin afin de permettre l'encastrement correct de la partie dentée du prolongateur avec l'extrémité dentée de la tringle 1B de la crémone 1.

Une fois saisie de son magasin, mise à longueur, la crémone ou ferrure est pré-positionnée dans le berceau de façon décalée comme il est représenté sur la figure 7 d'une distance d par rapport au bord de l'ouvrant correspondant. Dans cette position grâce au poussoir 10 la ferrure est mise en place dans le fond de rainure par déplacement horizontal et compte tenu des ferrures accessoires déjà en place du côté droit une extrémité de la tringle va venir en appui sur la face extérieure de la plaquette de recouvrement P et du côté gauche l'autre extrémité de la tringle va venir en appui sur le dispositif d'accrochage de la tringle de l'accessoire, par exemple le renvoi d'angle 3 déjà en place sur l'ouvrant.

Pour ce faire comme il a déjà été indiqué, les poussoirs 10 sont actifs et compte tenu de la forme des rampes des pinces 20, la ferrure se dégage de celle-ci pour venir en butée dans le fond de rainure pour sa partie la plus importante. A ce moment l'extrémité dentée droite de la tringle est donc en appui sur la plaquette P déformée par flexion.

Ensuite le dispositif de pose 30 côté gauche dont une partie est en butée avec l'extrémité de la ferrure vient par déplacement horizontal buter contre le bord de l'ouvrant permettant ainsi la mise en place de l'axe ressort dans la tringle grâce au poussoir associé 31 et ainsi l'accrochage est réalisé à l'angle gauche. L'autre extrémité de la têtière vient alors en appui sur la plaquette P déformée par flexion.

La plaquette P est alors éclipsée toujours grâce au tenon 31' et au recul du dispositif de pose correspondant 30'. L'extrémité de la tringle de la têtière peut alors s'encastrer dans la crémaillère du prolongateur 2 ou équivalent. Pour permettre cet encastrement automatique on utilise des moyens appropriés transmettant un micro-déplacement ou des vibrations à la tringle qui soumise au poussoir 10 vient s'engrener dans les dentures du prolongateur 2 ; le micro déplacement nécessaire est alors équivalent à une demi-denture. La crémone est alors mise en place.

Les plaquettes de recouvrement sont alors remises en place par leur poussoir respectif et la ferrure est prête pour passer au poste de vissage pour sa fixation définitive.

Dans le cas de ferrures de grande longueur afin d'éviter tout risque de flambage ou de déformation, on prévoit en plus du dispositif déjà décrit un outil de fixation (par vissage ou équivalent) pour immobiliser la tringle en un point intermédiaire entre les fixations déjà réalisées aux extrémités.

Une telle machine peut être appliquée à l'ouvrant autant de fois qu'il y a d'accessoires assujettis à ce dernier (exception faite des pièces d'articulation de l'ouvrant sur le dormant).

Pour les fixations définitives des ferrures sur l'ouvrant, on transfère l'ouvrant vers des postes de vissage indépendants ou l'ouvrant reste au même poste et l'on substitue à la machine de pose décrite une machine pourvue d'outillages de vissage.

Cette description correspond au montage d'une crémone têtière s'intercalant entre deux accessoires supposés déjà montés sur l'ouvrant tels que des renvois d'angle ou des prolongateurs, mais il va de soi que l'invention n'y est pas limitée. Le même type de machine peut par exemple permettre le montage de la crémone entre 1 ou 2 prolongateurs ou le montage d'une crémone seule définitivement apprêtée au chant de l'ouvrant à équiper.

Pour l'équipement de la traverse supérieure d'un ouvrant, la pose entre deux accessoires est identique, la seule différence étant que la crémone est remplacée ici par la têtière de compas ; en ce qui concerne la traverse inférieure les accessoires sont remplacés par une têtière et une tringle qui relie les deux angles côté paumelle par un verrouillage latéral. Les moyens de préhension de pose et de fixation sont identiques à la dépose de la crémone avec selon le cas, au moins un des moyens décrits.

La pose d'un renvoi d'angle est une des opérations les plus simples puisqu'il suffit de saisir l'accessoire avec un manipulateur approprié puis de procéder au pré-positionnement de son élément de renvoi (tringle) s'il n'est pas déjà pré-positionné à la fabrication et d'enfin de la mettre en référence avec l'angle de l'ouvrant. La dépose est guidée par la rainure de l'ouvrant elle-même puisque l'accessoire vient recouvrir le chant extérieur de l'angle qui constitue les repères de pose. Pour qu'il soit déposé dans le bon sens le renvoi d'angle comporte des repères physiques et fonctionnels qui permettent de contrôler son positionnement.

## Revendications

1 - Machine pour la pose automatique d'une ferrure ou de parties de ferrures périmétrales sur les montants et traverses d'un ouvrant, en particulier d'une crémone avec ses accessoires tels que renvois d'angle, prolongateurs ou équivalents, associés à des moyens automatiques de stockage, de préhension, de coupe et de mise en place de la ferrure dans la machine, comportant un berceau recevant la ferrure caractérisée :

    – en ce que ledit berceau est mobile par rapport à l'ouvrant :

        . selon un premier degré de liberté en translation verticale, de manière à permettre le placement de la ferrure en regard de la rainure de l'ouvrant,

. selon un second degré de liberté, en translation horizontale perpendiculairement à la rainure de l'ouvrant, de manière à permettre l'approche de la ferrure au droit de la rainure puis sa dépose dans celle-ci, et

. selon un troisième degré de liberté, en translation horizontale parallèlement à la rainure de l'ouvrant, de manière à permettre la mise en référence de la ferrure à partir de son extrémité

— et en ce que ledit berceau porte un ensemble d'outils de pose automatique.

**2** - Machine selon la revendication 1, caractérisée en ce que l'ensemble d'outils de pose comprend un dispositif de pose d'extrémité (30) pourvu d'un moyen de butée (30) pour l'extrémité de la crémone et d'un élément de blocage (31) translatable destiné à retenir et à mettre en place un accessoire à axe-ressort de liaison en extrémité de la tringle.

**3** - Machine selon la revendication 1, caractérisée en ce que l'ensemble d'outils de pose comprend un dispositif de pose d'extrémité (30') mobile longitudinalement par rapport au berceau et pourvu essentiellement d'un tenon (31') destiné à venir en prise avec un orifice d'une plaquette (P) d'un accessoire de ferrure pourvu d'un moyen d'accrochage d'une tringle dentée.

**4** - Machine selon la revendication 1, caractérisée en ce que l'ensemble d'outils comprend au moins un poussoir (10) translatable perpendiculairement au chant de l'ouvrant.

**5** - Machine selon la revendication 1, caractérisée en ce que l'ensemble d'outils comprend au moins une pince (20) comprenant des mâchoires de préhension de la ferrure.

**6** - Procédé de pose automatique d'une ferrure ou de parties de ferrures périmétrales sur les montants et traverses d'un ouvrant de fenêtre ou de porte-fenêtre, en particulier d'une crémone avec ses accessoires tels que renvois d'angle, prolongateurs ou équivalents, caractérisé en ce qu'il comprend les étapes suivantes :

— positionnement de la ferrure en vis-à-vis de la rainure de l'ouvrant (O), de façon décalée vers l'extérieur par rapport au bord de l'ouvrant équipé d'un accessoire à axe-ressort de liaison ;

— blocage de l'axe-ressort de liaison, et

— translation de la ferrure jusqu'à emboîtement de l'axe-ressort de liaison avec la ferrure.

**7** - Procédé de pose automatique d'une ferrure ou de parties de ferrures périmétrales sur les montants et traverses d'un ouvrant de fenêtre ou de porte-fenêtre, en particulier d'une crémone avec ses accessoires tels que renvois d'angle, prolongateurs ou équivalents, caractérisé en ce qu'il comprend les étapes suivantes :

— positionnement de la ferrure en vis-à-vis de la rainure de l'ouvrant (O), de façon décalée vers l'extérieur par rapport au bord opposé de l'ouvrant ;

— poussée de la ferrure au fond de la rainure de l'ouvrant ;

— translation d'une plaquette d'un accessoire à secteur denté jusqu'à venir occulter ce secteur denté ;

— translation de la ferrure dans le fond de la rainure d'ouvrant, son extrémité venant en butée contre la plaquette par déformation par flexion ;

— occultation de la plaquette ;

— engrènement de l'extrémité de tringle dentée dans le secteur denté ; et

— remise en place de la plaquette (P) au-dessus de l'extrémité de tringle.

2

P

1B

1

FIG.1

1B

1A

1D    1C

3

FIG. 2

FIG.3

20

H

H

10

**FIG.4**

F

20

**FIG.5**

10

**FIG.6**

**FIG.7**

**FIG. 8**

Office européen
des brevets

**RAPPORT DE RECHERCHE EUROPEENNE**

Numero de la demande

EP    91 40 0971

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| P,A | EP-A-373 991 (FERCO)<br>* colonne 3, ligne 26 - ligne 43 *<br>--- | 1,6,7 | B23P19/02<br>B23P19/04 |
| A | FR-A-2 560 091 (DROUOT)<br>* page 1 *<br>----- | 1,6,7 | |

| | | | DOMAINES TECHNIQUES RECHERCHES (Int. Cl.5) |
|---|---|---|---|
| | | | B23P<br>E05B<br>E06B<br>E05C |

Le présent rapport a été établi pour toutes les revendications

| Lieu de la recherche | Date d'achèvement de la recherche | Examinateur |
|---|---|---|
| LA HAYE | 12 AOUT 1991 | RIS M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

&  : membre de la même famille, document correspondant

EPO FORM 1503 03.82 (P0402)